# EUROPEAN PATENT APPLICATION

(11) **EP 0 753 734 A1**
(43) Date of publication of application: **15.01.1997**
(21) Application number: 96111219.0
(22) Date of filing: 11.07.1996
(51) Int. Cl.: G01N 21/76, G01N 21/25

(54) **Optical measuring apparatus**

(30) Priority: 12.07.1995 JP 176101/95
(71) Applicant: HAMAMATSU PHOTONICS K.K., Shizuoka-ken (JP)
(72) Inventor: Mizuguchi, Yoshinori, c/o Hamamatsu Photonics K.K., Hamamatsu-shi, Shizuoka-ken (JP); Sugiyama, Hirofuji, c/o Hamamatsu Photonics K.K., Hamamatsu-shi, Shizuoka-ken (JP); Ohashi, Yoshitaka, c/o Nikon Corporation, Tokyo (JP); Iida, Yoshimi, c/o NVC Inc., Tokyo (JP)
(74) Representative: Grünecker, August, Dipl.-Ing.

(57) **Abstract**

In an optical measuring apparatus, a dispensing means concurrently dispenses a reagent into individual wells of a microplate held at a predetermined position within a dark box. As a result of the dispensing operation, luminescence is generated due to an interaction between a sample and the reagent within each well. Since the bottom surface of the wells of the microplate is made of a light transmitting member, a part of the light generated by the luminous phenomenon is emitted to the bottom surface side of the microplate. The light thus emitted to the bottom surface side is input into an optics, which then forms, on the light receiving surface of an image pickup means, an image observed from the bottom surface side of the microplate. Thus formed image is captured by the image pickup means. Even when luminescence occurs in a short time, it can be measured promptly.

## Description

### BACKGROUND OF THE INVENTION

### Field of the Invention

The present invention relates to an optical measuring apparatus and, in particular, to a luminescence measuring apparatus which simultaneously measures a plurality of samples while using a microplate.

### Related Background Art

Conventionally, there have widely been used optical measuring apparatuses in which a microplate having 96 wells, for example, is employed, a reagent is injected into each well after a sample has been supplied thereto, and then light generated upon an interaction between the sample and the reagent is measured. From the viewpoint of the number of samples simultaneously subjected to optical measurement, these apparatuses are divided into individual sample measuring apparatuses and multiple sample concurrent measuring apparatuses.

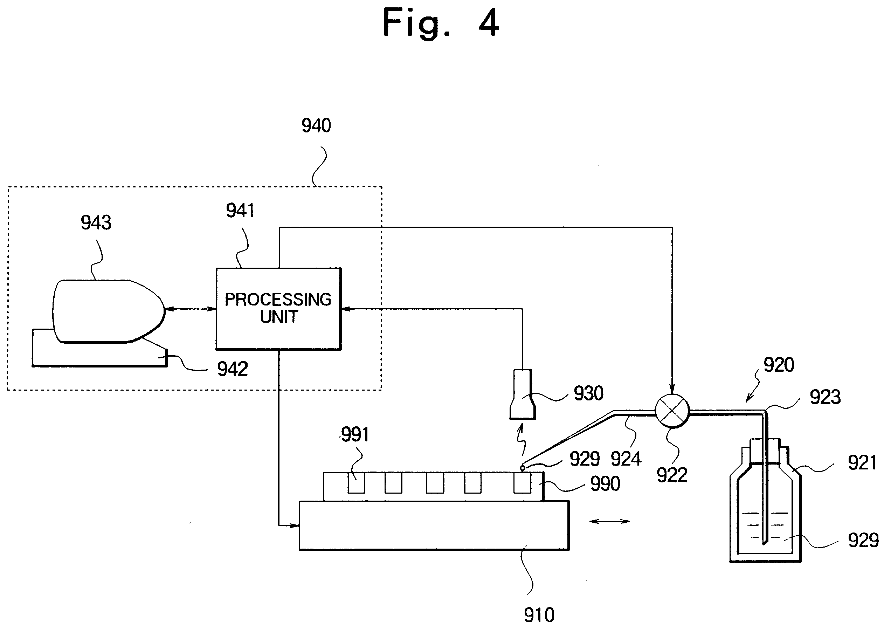

Fig. 4 is a typical configurational view of the conventional individual sample measuring apparatus (referred to as "conventional example 1" hereinafter) represented by optical measuring apparatus LB96P manufactured by Berthold Co., Ltd.

In this optical measuring apparatus, initially, a microplate 990 in which each well 991 has been charged with a sample (not depicted) is mounted on a carrier 910. Then, in a processing section 940, by way of an input device 942, a processing unit 941 is instructed to start measurement.

When instructed to start measurement, the processing unit 941 instructs the microplate carrier 910 to move the microplate 990 such that the first well 991 is placed at the dispensing position. Upon receiving this instruction, the microplate carrier 910 moves the microplate 990 so as to place the first well 991 at the dispensing position.

Then, the processing unit 941 instructs a dispenser 920 to perform a dispensing operation. Upon receiving this instruction, the dispenser 920 actuates a motor 922 so as to draw in, by way of a tube 923, a reagent 929 contained in a reagent container 921 and then dispense it, by way of a tube 924, into the well 991.

Light is generated as a result of an interaction between the reagent 929 and the sample within the well 991 into which the reagent 929 has been dispensed. A photodetector 930 receives thus generated light and outputs a light detection signal. The processing unit 941 collects the light detection signal. Thus, the measurement of the sample at the dispensing position of the first measuring well 991 in the microplate 990 is completed.

Thereafter, the processing unit 941 successively instructs the microplate carrier 910 to move the measuring wells 991 to the dispensing position. After this movement, the processing unit 941 instructs the dispenser 920 to perform a dispensing operation, and then collects a light detection signal concerning the light generated in each well 991 and detected by the photodetector 930 each time the light is detected.

After data have been collected from all the wells 991 in the microplate 990, the processing unit 941 processes thus collected data and displays the result of processing on a display device 943.

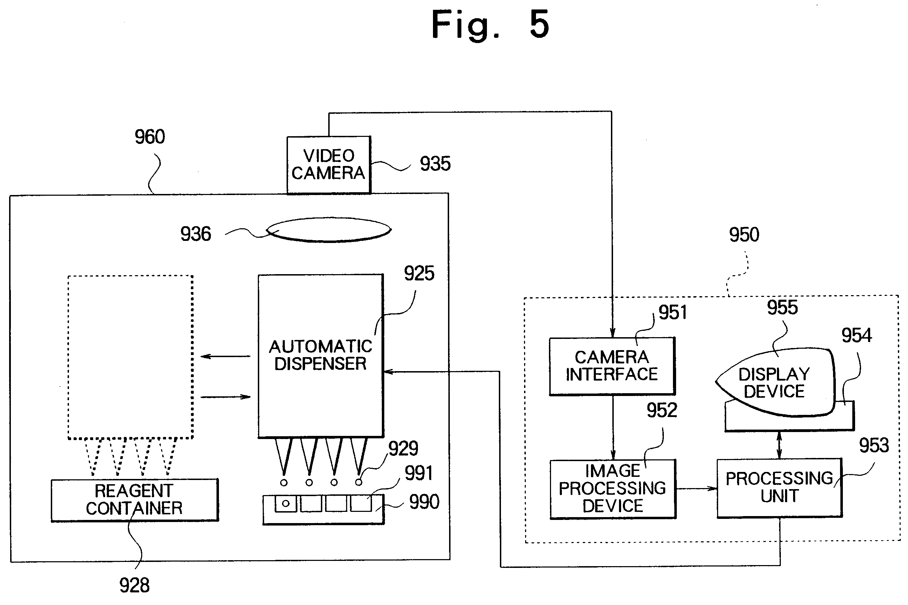

Next, Fig. 5 is a typical configurational view of the conventional multiple sample concurrent measuring apparatus (referred to as "conventional example 2" hereinafter) represented by a configuration in which optical measuring apparatus ARGUS50/MP manufactured by Hamamatsu Photonics, Co., Ltd. and an automatic dispenser are combined together.

In this optical measuring apparatus, initially, the microplate 990 in which each well 991 has been charged with a sample is installed within a dark box 960. Then, in a processing section 950, by way of an input device 954, a processing unit 953 is instructed to start measurement.

When instructed to start measurement, the processing unit 953 instructs an automatic dispenser 925 to perform a dispensing operation. Upon receiving this instruction, the automatic dispenser 925 draws in a reagent contained in a reagent container 928, moves to a position above the microplate 990, and then concurrently dispenses the reagent into the individual wells 991 of the microplate 990. After this concurrent dispensing operation, the automatic dispenser 925 moves out of the position above the microplate 990.

Light is generated as a result of an interaction between the reagent 929 and the sample within each well 991 into which the reagent 929 has been dispensed. An optics 936 receives the light generated in each well 991 and forms, on an image pickup surface of a ultrahigh sensitivity video camera 935, an image of the microplate 990 observed from thereabove. The video camera 935 captures the image formed on its image pickup surface and outputs thus captured image signal to the processing section 950. In the processing section 950, the image signal is input, by way of a camera interface 951, into an image processing device 952, where it is subjected to an image processing. The image processing signal is transmitted to the processing unit 953 and then processed there, whereby the result of the processing is displayed on a display device 955.

Due to the foregoing configurations, the conventional optical measuring apparatuses may have the following problems.

In the conventional example 1, since the dispensing operation and the measurement of luminescence are successively repeated for each of the wells 991 in the microplate, it takes time to measure a plurality of samples. Accordingly, it may be problematic from the viewpoint of prompt measurement.

In the apparatus of the conventional example 2, on the other hand, since the automatic dispenser 925 is positioned between the image pickup surface of the video camera 935 and the microplate at the time of dispensing, the image capturing operation cannot be performed until the automatic dispenser is removed therefrom. Therefore, it cannot be applied to a case where luminescence is attained in a short time after the reagent is dispensed.

### SUMMARY OF THE INVENTION

In view of the foregoing, the object of the present invention is to provide an optical measuring apparatus which can promptly perform measurement even when luminescence occurs in a short time.

The optical measuring apparatus in accordance with the present invention comprises:
a microplate having a plurality of wells whose bottom surface is made of a light transmitting member and to which an object to be measured is supplied;
a dispensing means which is held at a predetermined position and dispenses a reagent into each well of the microplate;
an optics which, at the predetermined position, receives, from the bottom surface side of the well, light emitted upon an interaction between the object to be measured and the reagent within the well and forms an image observed from the bottom surface side of the microplate;
a dark box which is made of a light shielding member and accommodates the microplate, the dispensing means, and the optics therein; and
an image pickup means which has a light receiving surface at the imaging surface of the optics and captures the image observed from the bottom surface side of the microplate.

In the present invention, one or a plurality of kinds of reagents may be used, while the dispensing means may be provided with concurrent dispensers whose number is identical to the number of the kinds of the reagents, and a carrier means for successively moving the microplate from its initially disposed position to the dispensing positions corresponding to the respective concurrent dispensers may be further provided.

In the optical measuring apparatus of the present invention, the dispensing means concurrently dispenses the reagent into the individual wells of the microplate held at a predetermined position within the dark box. As a result of the dispensing operation, luminescence occurs due to an interaction between the sample and the reagent within each well.

Since the bottom surface of the well of the microplate is made of a light transmitting member, a part of the light generated upon the luminous phenomenon is emitted toward the bottom surface side of the microplate. The light thus emitted to the bottom surface side is input into the optics, which then forms, on the light receiving surface of the image pickup means, an image observed from the bottom surface side of the microplate. Thus formed image is captured by the image pickup means. When the result of this image capturing operation is processed, the light generated due to the interaction between the reagent and the plurality of samples is collectively measured for the individual wells of the microplate.

Also, in the optical measuring apparatus, since the light emitted toward the bottom surface side is measured, the optical measurement can be effected without moving the dispensing means which performs the dispensing operation from the upper surface side.

Further, concurrent dispensers may be disposed in the number identical to the number of kinds of the reagent, and the microplate may be successively moved by a carrier means to the dispensing positions corresponding to the respective concurrent dispensers. At this time, the reagent may be dispensed each time the microplate is moved, and the optical measurement may be performed at a predetermined position at which luminescence occurs. As a result, the optical measurement can be efficiently effected.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a configurational view showing an optical measuring apparatus in accordance with an embodiment of the present invention;
Fig. 2 is a configurational view showing an automatic dispenser in the optical measuring apparatus in accordance with the embodiment of the present invention;
Fig. 3 is a configurational view showing a dispensing control section in the optical measuring apparatus in accordance with the embodiment of the present invention;
Fig. 4 is a configurational view showing an optical measuring apparatus in accordance with conventional example 1; and
Fig. 5 is a configurational view showing an optical measuring apparatus in accordance with conventional example 2.

### DESCRIPTION OF THE PREFERRED EMBODIMENTS

In the following, embodiments of the optical measuring apparatus in accordance with the present invention will be explained with reference to the attached drawings. Here, in the explanation of the drawings, elements identical to each other will be referred to with marks identical to each other without their overlapping explanations being repeated. By way of example, the following explanation of the embodiments of the present invention refers to HPA (Hybridization Protection Assay) method in which two kinds of liquids, NaOH solution and H₂O₂ solution are dispensed.

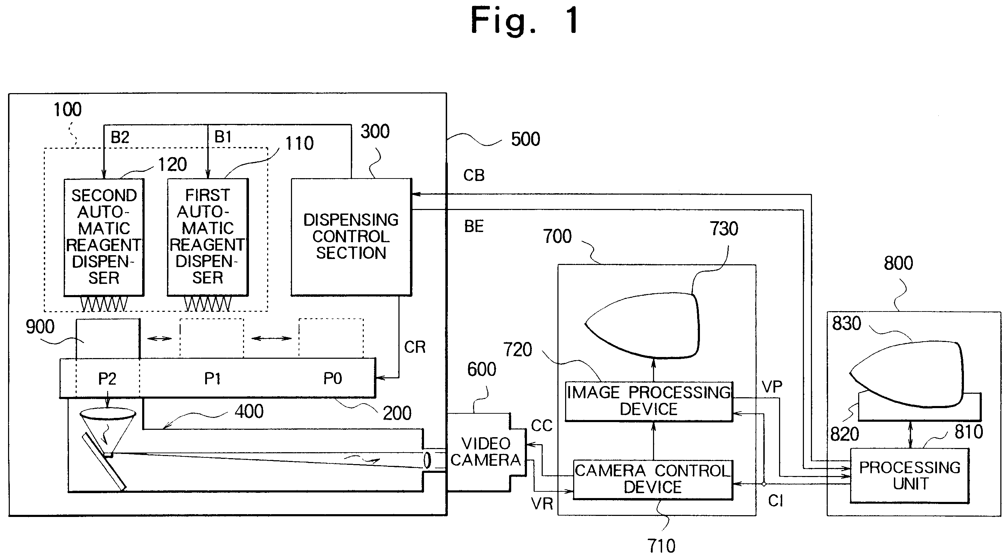

Fig. 1 is a configurational view of an optical measuring apparatus in accordance with an embodiment of the present invention. This optical measuring apparatus uses a microplate 900 whose bottom surface is made of a light transmitting member. In Fig. 1, the optical measuring apparatus comprises a dispensing section 100, a carrier 200, a dispensing control section 300, an optics 400, a dark box 500, a video camera 600, an image processing section 700, and a processing section 800.

The dispensing section 100 comprises a first automatic reagent dispenser 110 which concurrently dispenses a first reagent into a plurality of wells (not depicted) of the microplate 900 according to a first dispensing instruction signal B1 and a second automatic reagent dispenser 120 which concurrently dispenses a second reagent into a plurality of wells of the microplate 900 according to a second dispensing instruction signal B2. Also, the carrier 200 carries the microplate 900 and moves it, according to a carrier instruction signal CR, among an initial position P0, a first dispensing position P1 corresponding to the first automatic dispenser 110, and a second dispensing position P2 corresponding to the second automatic dispenser 120. The dispensing control section 300 receives a dispensing control signal CB, decodes it, and then outputs the dispensing instruction signals B1 and B2 as well as the carrier instruction signal CR. At the second dispensing position P2, the optics 400 receives light which is generated as a result of an interaction between the sample and the reagents within each well of the microplate 900 and emitted to the bottom surface side of the microplate 900 and then forms an image observed from the bottom surface side of the microplate 900. The dispensing section 100, the carrier 200, the dispensing control section 300, and the optics 400 are accommodated within the dark box 500 which is a housing made of a light shielding member.

The video camera 600 of a high sensitivity has a light receiving surface at the imaging surface of the optics 400 and captures an image on the light receiving surface. The image processing section 700 outputs a camera control instruction signal CC toward the video camera 600, while receiving a captured image signal VR output from the video camera 600 and subjecting it to an image processing. The processing section 800 outputs the dispensing control signal CB toward the dispensing control section 300, outputs an image processing instruction signal CI toward the image processing section 700, and receives and processes an image processing signal VP output from the image processing section 700.

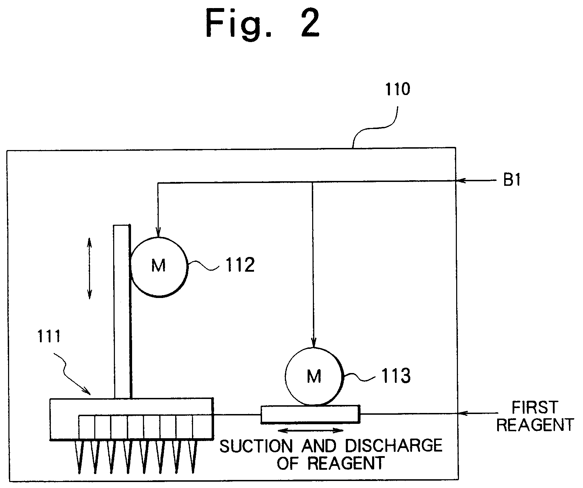

Fig. 2 is a configurational view of the first automatic dispenser 110. Here, the second automatic dispenser 120 has a configuration similar to that of the first automatic dispenser 110. As shown in Fig. 2, the first dispenser 110 comprises a dispenser portion 111, a stepping motor 112 which drives the dispenser portion 111 up and down according to the first dispensing instruction signal B1, and a stepping motor 113 which is driven to effect suction and discharge of the first reagent according to the first dispensing instruction signal B1.

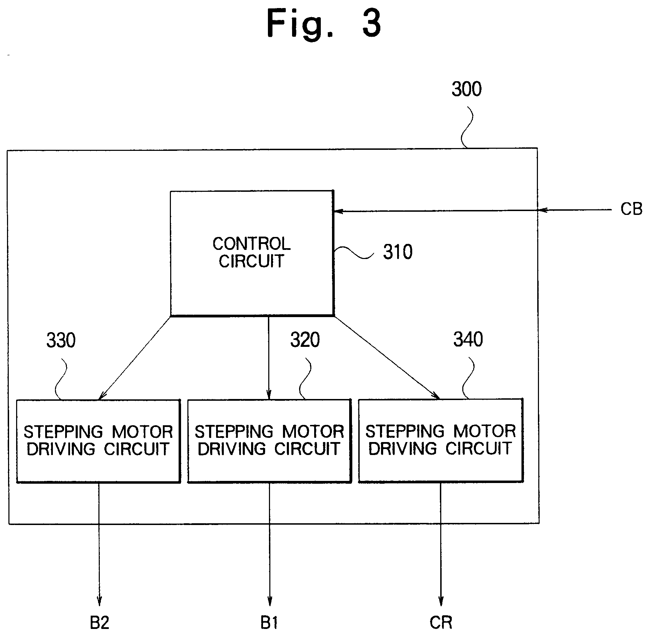

Fig. 3 is a configurational view of the dispensing control section 300. As shown in Fig. 3, the dispensing control section 300 comprises a control circuit 310 which receives and decodes/interprets the dispensing instruction signal CB transmitted from the processing section 800, a first stepping motor driving circuit 320 which outputs the first dispensing instruction signal B1 according to an instruction from the control circuit 310, a second stepping motor driving circuit 330 which outputs the second dispensing instruction signal B2 according to an instruction from the control circuit 310, and a third stepping motor driving circuit 340 which outputs the carrier instruction signal CR according to an instruction from the control circuit 310.

The image processing section 700 comprises a camera control device 710 which, according to the image processing instruction signal CI from the processing section 800, outputs the camera control instruction signal CC to the video camera 600 while receiving the captured image signal VR output from the video camera 600; an image processing device 720 which receives an image signal output from the camera control device 710 and, according to the image processing instruction signal CI from the processing section 800, executes an image processing; and an image display device 730 which displays an image processed by the image processing device 720.

The processing section 800 comprises a processing unit 810 which outputs the dispensing control signal CB toward the dispensing control section 300, outputs the image processing signal CI toward the image processing section 700, and receives and processes the image processing signal VP output from the image processing section 700; an input device 820 by which an instruction on the operation is input to the processing unit 810; and a display device 830 which displays the result of processing in the processing unit 810 or the like.

The optical measuring apparatus is configured as explained above and performs the optical measurement in the following manner.

First, a sample which is an object to be measured is prepared within each well of the microplate 900. In the HPA method for studying a class-II antigen in detail, for example, DNA which is related to the class-II antigen in leucocyte is amplified as RNA and then hybridized with various kinds of DNA probes which have been held on the microplate 900.

Thus prepared microplate 900 is disposed at the predetermined position P0 within the dark box 500. When the microplate 900 is disposed at the predetermined position P0, the dispensing control section 300 moves the microplate 900 to the dispensing position corresponding to the first automatic dispenser 110.

Under this condition, when the input device 820 instructs the processing unit 810 to start measurement, the dispensing control signal CB is transmitted from the processing unit 810 to the dispensing control section 300. Upon receiving the dispensing control signal CB, the dispensing control section 300 initially outputs the first dispensing instruction signal B1 to the first automatic dispenser 110 according to the dispensing control signal CB. In response to the first dispensing instruction signal B1, the first automatic dispenser 110 automatically dispenses predetermined amounts of the first reagent in a concurrent manner.

After the dispensing operation of the first automatic dispenser 110 is completed, the dispensing control section 300 outputs the carrier instruction signal CR so as to instruct the carrier 200 to move the microplate 900 to the dispensing position corresponding to the second automatic dispenser 120. According to the carrier instruction signal CR, the carrier 200 moves the microplate 900 to the dispensing position corresponding to the second automatic dispenser 120. Thereafter, the dispensing control section 300 outputs the second dispensing instruction signal B2 to the second automatic dispenser 120. In response to the second dispensing instruction signal B2, the second automatic dispenser 120 automatically dispenses predetermined amounts of the second reagent in a concurrent manner. After the dispensing operation is completed, the dispensing control section 300 transmits a dispensing completion signal BE to the processing unit 810.

After the dispensing operation is completed, the sample and the reagent interact with each other within each well of the microplate 900, thereby generating light. A part of thus generated light is emitted by way of the bottom surface of the microplate 900 toward the bottom surface side thereof. The light emitted from the microplate 900 on the bottom surface side thereof is received by the optics 400, whereby an image observed from the bottom surface side of the microplate 900 is formed at the light receiving surface of the video camera 600.

On the other hand, when the dispensing operation is completed and the dispensing completion signal BE is transmitted thereto, the processing unit 810 outputs the image processing instruction signal CI in view of the time of luminescence and outputs the camera control instruction signal CC to the video camera 600 by way of the camera control device 710 so as to instruct the video camera 600 to capture the image. Since there is no element intervening between the microplate 900 at the second dispensing position P2 and the optics 400, the image capturing operation can be started immediately after the dispensing operation. The video camera 600, which has been instructed to capture the image, captures the image formed on its light receiving surface and outputs the captured image signal VR.

The captured image signal VR is input into the camera control device 710, whereas the image signal output from the camera control device 710 is input into the image processing device 720. The image processing device 720 performs the image processing based on thus input image signal and displays the result of the image processing on the image display device 730 in black and white or in a pseudo color while transmitting it to the processing unit 810. The processing unit 810 quantitatively analyzes the result of image processing and stores the result of analysis while displaying it on the display device 830.

When measurement of luminescence for one microplate 900 is completed in the foregoing manner, the processing unit 810 instructs the dispensing control section 300 to move the microplate 900 to the initial position. Upon receiving this instruction, the dispensing control section 300 transmits the carrier instruction signal CR to the carrier 200. Then, the carrier 200 transfers the microplate 200 from the second dispensing position P2 to the initial position P0. Thereafter, the microplate 900 is taken out from the dark box 500, whereby the measuring process is completed.

Thus, the measurement of luminescence for a plurality of samples supplied to the microplate 900 is promptly effected.

Without being restricted to the above-mentioned embodiment, the present invention can be modified. For example, while two automatic dispensers are used in the above-mentioned embodiment, when the number of the automatic dispensers is changed to one or three so as to make it correspond to the number of reagents necessary for measurement, optical measurement in which time between the dispensing of the reagent and luminescence is short can be promptly effected as in the case of the above-mentioned embodiment. Also, even reagents whose duration of luminescence is short, e.g., about several seconds or shorter, can be suitably used.

As explained in the foregoing, since the optical measuring apparatus of the present invention uses a microplate having wells whose bottom surface is made of a light transmitting member, concurrently dispenses a reagent into the wells, and collectively captures images of the light emitted to the bottom surface side of the microplate, measurement data can be promptly obtained even when a plurality of samples are measured, while luminescence from the samples generated in a short time immediately after the dispensing of the reagent can be promptly measured.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

The basic Japanese Application No.176101/1995 filed on July 12, 1995 is hereby incorporated by reference.

## Claims

1. An optical measuring apparatus comprising:
a microplate having a plurality of wells whose bottom surface is made of a light transmitting member and to which an object to be measured is supplied;
a dispensing means which is held at a predetermined position and dispenses a reagent into each well of said microplate;
an optics which, at said predetermined position, receives, from the bottom surface side of the well, light emitted upon an interaction between the object to be measured and the reagent within said well and forms an image observed from the bottom surface side of said microplate;
a dark box which is made of a light shielding member and accommodates said microplate, said dispensing means, and said optics therein; and
an image pickup means which has a light receiving surface at the imaging surface of said optics and captures the image observed from the bottom surface side of said microplate.

2. An optical measuring apparatus according to claim 1, wherein said dispensing means simultaneously dispenses the reagent into a plurality of the wells.

3. An optical measuring apparatus according to claim 1, wherein one kind of said reagent is used and said dispensing means has one concurrent dispenser.

4. An optical measuring apparatus according to claim 3, further comprising a carrier means for moving said microplate from an initial position at which said microplate is disposed to a dispensing position corresponding to said concurrent dispenser.

5. An optical measuring apparatus according to claim 1, wherein a plurality of kinds of said reagent are used and said dispensing means has concurrent dispensers whose number is identical to the number of the kinds of said reagent.

6. An optical measuring apparatus according to claim 1, wherein said image pickup means simultaneously measures luminescence in a plurality of the wells.

7. An optical measuring apparatus according to claim 1, wherein said reagent is a luminous reagent whose duration of luminescence is not longer than several seconds.

8. An optical measuring apparatus according to claim 1, further comprising an image processing means which performs an image processing based on an image signal from an image pickup means and displays a result of the image processing.

9. An optical measuring apparatus according to claim 8, further comprising a processing means which analyzes the result of the image processing performed by the image processing means and stores and displays a result of this analysis.
